# EUROPEAN PATENT APPLICATION

(11) **EP 0 864 455 A2**
(43) Date of publication of application: **16.09.1998**
(21) Application number: 98300874.9
(22) Date of filing: 06.02.1998
(51) Int. Cl.: B60H 3/00

(54) **Air pollution reduction in vehicles**

(30) Priority: 14.03.1997 GB 9705399
(71) Applicant: The BOC Group plc, Windlesham Surrey GU20 6HJ (GB)
(72) Inventor: Marshall, Robert John, Great Missenden Buckinghamshire HP16 0ER (GB)
(74) Representative: MacLean, Martin David

(57) **Abstract**

An apparatus for reducing airborne pollution inside a vehicle passenger compartment comprising means for storing a breathable gas (2) and means for controlling (4,6) the introduction of said breathable gas into the compartment, thereby positively to displace airborne pollutants therefrom.

## Description

This invention relates to a system for reducing airborne pollution inside vehicles, particularly inside the passenger compartment of a vehicle such as a car.

In many congested cities, and indeed in many other areas, airborne pollution is a serious health hazard: it can also reduce visibility, and/or produce undesirable odours. When a colder layer of air settles under a warm layer, producing a temperature or thermal inversion, atmospheric mixing is retarded and airborne pollutants may accumulate near the ground. Inversions can become sustained under a stationary high pressure system coupled with low wind speeds. This is a common phenomenon in, for example, Mexico City and Los Angeles.

In areas where such air pollution occurs frequently, many vehicles are equipped with air conditioning units which treat the air entering the vehicle passenger compartment. In addition to heating or cooling the air within the passenger compartment, such units are commonly provided with filters so as to remove airborne particulate matter from the air within the vehicle passenger compartment. Such air conditioning units also generally operate with the vehicle passenger compartment substantially sealed against the ingress of ambient air into the passenger compartment, and merely to recycle the air within the passenger compartment. Whilst these conventional systems do improve the general level of comfort for a passenger, they do not (with the exception of filtering airborne particulate matter) improve air quality within the vehicle. Pollutants such as Carbon Monoxide, Carbon Dioxide, Sulphur Dioxide, Nitrogen Oxide, Photochemical Oxidants and Non-Methane Hydrocarbons in the ambient atmosphere are simply recycled, through the air conditioning unit, within the vehicle passenger compartment, endangering the health of the passengers. Furthermore, since passenger compartments are not commonly provided with completely leak-proof seals, airborne pollution in the ambient atmosphere outside the vehicle insidiously seeps into the vehicle passenger compartment.

It is an object of the present invention to reduce and possibly eliminate the above problems associated with airborne pollution within the passenger compartment of vehicles.

Accordingly, the present invention provides apparatus for reducing airborne pollution inside a vehicle comprising means adapted to store a breathable gas in a liquid state, means for introducing the breathable gas into a passenger compartment of said vehicle, and means for controlling the introduction of the breathable gas into the passenger compartment, thereby to displace airborne pollutants from said compartment.

The breathable gas comprises a self contained clean air supply which can be introduced into the vehicle passenger compartment in a controlled manner in order to keep the air quality within the vehicle high, by displacing airborne pollutants from the vehicle passenger compartment. The breathable gas may comprise compressed air, or liquefied air, stored in a standard air cylinder, or, in larger vehicles such as trucks, trains, boats and the like, means may be provided, carried on the vehicle, to treat atmospheric air so as to compress and/or liquefy it, and filter it prior to storing it for introduction into the passenger compartment.

Preferably means are provided for sensing the ambient air pressure outside the vehicle and the air pressure within the vehicle passenger compartment, the control means being adapted to release the breathable gas at a sufficient rate so as to maintain the air pressure within the compartment above ambient air pressure. By holding a constant pressure differential with respect to the external environment and a positive flow of clean, breathable air into the vehicle it necessarily follows that some of the polluted air originally trapped in the vehicle must be expelled through the vehicle air extraction vents. By maintaining a positive pressure differential, of about 0.05 bar (i.e. maintaining the pressure within the vehicle passenger compartment about 5% above ambient atmospheric pressure outside the vehicle) not only is the polluted air within the passenger compartment gradually expelled through the vehicle extraction vents, but also the slight overpressure with the passenger compartment serves to prevent the ingress of airborne pollution into the passenger compartment through poorly -sealed doors, windows and the like.

Although in its simplest form the apparatus in accordance with the invention is manually operated, preferably an automatic control means, or controller, is provided, such as a suitable microprocessor. The controller may be adapted to sense the vehicles speed so as to release breathable gas into the vehicle passenger compartment whenever the sensed vehicle speed is less than a first predetermined speed (40mph/64kph, say) and to stop the release of breathable gas whenever the sensed vehicle speed exceeds a second predetermined speed (45 mph/74 kph, say) on the assumption that, when the vehicle is travelling at speeds above the second predetermined speed it will almost certainly be in a non-congested area, which will presumably be an area of low atmospheric pollution, and therefore the "on board" clean air supply can be saved. The proposed first and second predetermined speeds in parenthesis have been suggested to avoid the control means "hunting", and these speeds can clearly be adjusted so as to adapt to airborne pollution levels in different areas. Additionally or alternatively means may be provided to allow a passenger to set, or adjust, these pre-determined speeds.

The apparatus may also incorporate means for releasing scent into the flow of breathable gas so as to give the clean air entering the vehicle compartment a pleasing fragrance.

As mentioned above, many vehicles in areas of high air pollution are equipped with air conditioning systems. Preferably the control means of the invention is adapted to actuate the vehicle air conditioning system so as to recycle the air within the passenger compartment, and to preclude the ingress of air from outside the vehicle thereinto whenever the sensed vehicle speed is less than another pre-determined speed (which may be the same as the first pre-determined speed mentioned above). The control means may also be adapted to actuate the air conditioning system so as to draw air into the passenger compartment from outside the vehicle whenever the sensor vehicle speed exceeds a forth pre-determined speed (which may be the same as the second pre-determined speed). These arrangements also capitalise on the assumption that there is a lower level of atmospheric pollution in areas where the vehicle is able to travel at speed.

Having described the invention in outline, specific embodiments in accordance with the present invention will now be described, by way of example only, and with reference to the accompanied drawings in which:
Figure 1 is a schematic diagram of a first, manually-operated apparatus in accordance with the invention;
Figure 2 is a second, automatically-controlled embodiment of apparatus in accordance with the invention; and
Figure 3 is a third, automatically-controlled, embodiment of apparatus in accordance with the invention.

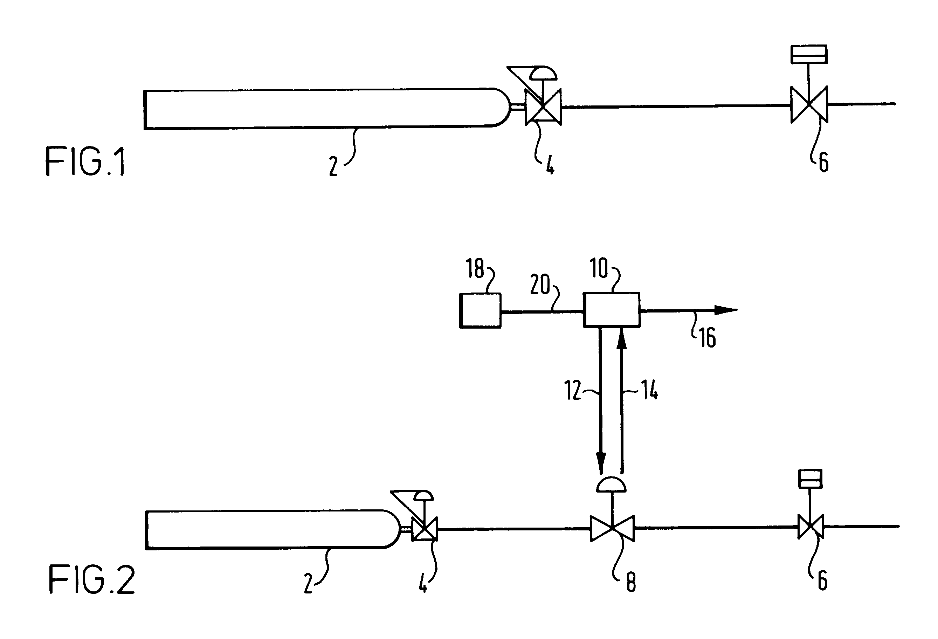

In each of Figures 1, 2 and 3 like reference numerals are used to denote like elements.

In the embodiment of Figure 1, a standard air cylinder 2, such as a medical air cylinder for containing compressed air or liquefied air, and its associated regulator valve 4 are installed in a suitable location within a vehicle (not shown). Breathable gas from the cylinder 2 is introduced into the vehicle passenger compartment C at a rate controlled by regulator valve 4 and by on-off valve 6, which may be manually actuable from within the passenger compartment or it may be electrically switched (so as to come on whenever the vehicle engine is running, for example).

In the embodiment of Figure 2 a control valve 8 is provided in the gas line between the cylinder 2 and the on/off valve 6, the control valve 8 being of the type which closes in the event of failure. Control valve 8 is connected by a lines 12, 14 to an electronic controller 10 (a suitably programmed microprocessor). Controller 10 is connected by line 20 to vehicle speed sensor 18 and, in response to a signal indicating that the sensed vehicle speed has fallen below a first pre set speed (40mph/64kph, say) or has risen above a second pre-determined speed (45mph/72kph, say) moves the control valve 8 into the open or closed position, respectively, so as to allow breathable gas to enter into the vehicle passenger compartment C. Controller 10 is also adapted to control a vehicle air conditioning unit (not shown) via line 16 in response to the sensed vehicle speed. Controller 10 sends signals along line 16 to the air conditioning unit so as to recycle air within the vehicle passenger compartment C at lower vehicle speeds, or when control valve 8 is open, and to admit ambient air into the vehicle passenger compartment C at higher vehicle speed, or when control valve 8 is closed.

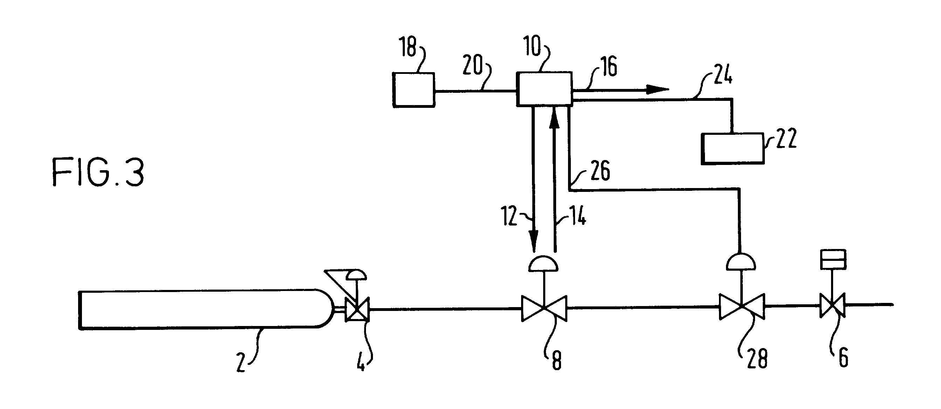

In the embodiment shown in Figure 3 a differential barometric pressure sensor 22 sends a signal along line 24 to controller 10 indicative of the difference between ambient atmospheric pressure outside the vehicle and the air pressure within the vehicle passenger compartment, and controller 10 actuates a second control valve 28 (again of the "fail safe" type), via line 26, in response to the sensed differential barometric pressure. The system is adapted so as to maintain a slight positive pressure within vehicle passenger compartment C, so as to prevent the ingress of polluted atmospheric air thereinto, the average positive "over pressure" being about 0.05 bar. In order to avoid "hunting" the controller 10 is programmed to open control valve 28 when the air pressure within vehicle passenger compartment C is less than about 0.02 bar over the ambient atmospheric pressure outside the vehicle and to close valve 28 whenever the air pressure within the vehicle passenger compartment C is more than about 0.2 bar above ambient atmospheric pressure.

The embodiments described above are suitable for installation, either as a retrofit or as a "factory fitted" option, in any sort of vehicle, such as cars, buses, lorries, trains, boats, light aircraft and so forth. The cylinders 2 can be recharged (at a petrol station, in the case of a road vehicle, for example) whilst fitted to the vehicle, or they could be releasably secured to the vehicle so that the cylinder can, when empty, be replaced quickly and simply with a full cylinder. Means (not shown) may be provided to introduce some form of scent into the flow of breathable gas into the vehicle passenger compartment C to provide a pleasing fragrance thereby to improve the passenger environment and to mask any unpleasant odours of a hideously unspeakable nature.

Having described specific embodiments in accordance with the invention, many modifications and specific applications will be readily apparent to those skilled in the art. For example, in larger vehicles there may be a plurality of gas cylinders 2, and/or means may be provided, carried on the vehicle, to charge the cylinder (s) 2 with compressed and/or liquefied air drawn from the atmosphere outside the vehicle, or to provide such a clean, breathable gas direct to the vehicle passenger compartment C. In vehicles where doors are frequently opened, such as buses, the differential barometric pressure sensor described above may be omitted, or disabled where fitted. Means may be provided to allow a passenger to adjust the various speeds and/or pressures at which the various control valves are actuated in order to satisfy personal requirements or to account for variable ambient conditions, and a carbon monoxide monitor employed to activate the inflow of lean, breathable air whenever the carbon monoxide level exceeded a set point. This would override any other control (eg speed or differential pressure) to ensure that driver/passenger health, safety and comfort were maintained at all times. In addition, although the invention has been described above in relation to a vehicle passenger compartment, it will be readily understood that the invention is equally applicable to other vehicle compartments, such as those for carrying livestock or indeed any compartment for carrying substances which are adversely affected by airborne pollutants.

## Claims

1. Apparatus for reducing airborne pollution inside a vehicle comprising means adapted to store a breathable gas in a liquid state, means for introducing the breathable gas into a passenger compartment of said vehicle, and means for controlling the introduction of the breathable gas into the passenger compartment, thereby to displace airborne pollutants from said compartment.

2. Apparatus as claimed in Claim 1 comprising means for sensing ambient air pressure and the air pressure within said compartment, the control means being adapted to release breathable gas at a sufficient rate as to maintain the air pressure within the compartment above ambient air pressure.

3. Apparatus as claimed in Claim 1 or 2 comprising means for sensing the speed of the vehicle, the control means being adapted to actuate the release of breathable gas whenever the sensed vehicle speed is less than a first predetermined speed.

4. Apparatus as claimed in Claim 3 wherein the control means is adapted to stop the release of breathable gas whenever the sensed vehicle speed exceeds a second predetermined speed.

5. Apparatus is claimed in any preceding claim comprising means for releasing a fragrance into the vehicle compartment.

6. A vehicle comprising apparatus as claimed in any preceding claim.

7. A vehicle as claimed in Claim 6 comprising an air conditioning system and vehicle speed sensing means, wherein the control means is adapted to actuate the air conditioning system so as to recycle the air within the said compartment, and to preclude the ingress of air from outside the vehicle thereinto, whenever the sensed vehicle speed is less than a third predetermined speed.

8. A vehicle as claimed in Claim 7 wherein the control means is adapted to actuate the air conditioning system so as to draw air into the said compartment from outside the vehicle whenever the sensed vehicle speed exceeds a fourth predetermined speed.

9. A vehicle as claimed in any one of Claims 6 to 8 wherein the storage means is/are realisably secured to the vehicle.

10. A vehicle as claimed in any one of Claims 6 to 9 comprising means for producing said breathable gas from the ambient air.
